Europäisches Patentamt

**European Patent Office**

Office européen des brevets

(11) Publication number: **0 213 875 B1**

## (12) EUROPEAN PATENT SPECIFICATION

(45) Date of publication of patent specification: 29.05.91  (51) Int. Cl.⁵: **G11B 5/58**, G11B 5/187

(21) Application number: 86306402.8

(22) Date of filing: 19.08.86

(54) Recording head and support arm for stretched surface recording medium.

(30) Priority: 22.08.85 US 768509

(43) Date of publication of application:
**11.03.87 Bulletin 87/11**

(45) Publication of the grant of the patent:
**29.05.91 Bulletin 91/22**

(84) Designated Contracting States:
**AT DE FR GB IT NL**

(56) References cited:
**EP-A- 0 007 401
EP-A- 0 049 755
EP-A- 0 121 057
US-A- 3 537 083**

**IBM TECHNICAL DISCLOSURE BULLETIN, vol.
22, no. 4, September 1979, pages 1597-1599,
Armonk, New York, US; A.J. BOWEN et al.:
"Flexible disk and self-adaptive head com-
bination"**

**PATENT ABSTRACTS OF JAPAN, vol. 9, no.
177 (P-375)[1900], 23rd July 1985; & JP-A-60
50 778 (FUJITSU K.K.) 20-03-1985**

**IBM TECHNICAL DISCLOSURE BULLETIN, vol.
20, no. 8, January 1978, pages 3185-3186,**

Armonk, New York, US; W. HEHL et al.:
**"Spherical multigroove magnetic head de-
sign"**

(73) Proprietor: **MINNESOTA MINING AND MANU-
FACTURING COMPANY
3M Center, P.O. Box 33427
St. Paul, Minnesota 55133-3427(US)**

(72) Inventor: **The inventors have agreed to waive
their entitlement to designation**

(74) Representative: **Baillie, Iain Cameron et al
c/o Ladas & Parry Isartorplatz 5
W-8000 München 2(DE)**

## Description

### Technical Field

This invention relates to stretched surface recording (SSR) disks and, more particularly, magnetic transducer heads for use in conjunction with such SSR disks.

### Background Art

It is known from US-A-3537083 to provide a rotating disk base assembly for magnetic recording devices in which the disk base is relieved to define a cavity across which is stretched a flexible magnetic recording film and a recording head is located to contact the recording film. So as to provide contact between the recording film and the recording head air pressure in the cavity is controlled to raise or lower the film with respect to the recording head. In this reference the head and arm upon which the head is located are rigidly mounted and as noted there is physical contact between the head and the recording film. In EP-A-0007401 there is disclosed a rigid disk which is arranged to be used in conjunction with a magnetic transducer head slider support assembly which has a one piece arm that is resilient and which carries a head that is able to pitch and roll, the head being spaced from the magnetic recording medium. In such data recording configurations, a recording head is "flown" relative to a magnetic recording medium by moving the recording head rapidly relative to the recording medium and allowing an air bearing to support the head above the surface of the recording medium. Typical spacings between the recording head and the medium are of the order of a few tenths of a micrometer and must be maintained to prevent damage to either the recording head or the recording medium. At the same time, the flying height of the head relative to the medium must be closely controlled to maintain recording quality and the flying height cannot fluctuate or modulation of the signal imparted from the recording head to the recording medium will occur.

In EP-A-0l21057 there is disclosed a transducer suspension system in which in Figure 9 there is disclosed a support arm similar to the arm used in EP-A-0007401 in which there is an angle between the mounting portion of the arm and the biasing portion thereof.

The present invention consists basically of a recording head having a spherical surface in proximity to the recording medium and a series of grooves in the spherical surface which are aligned with the direction of relative movement between the recording head and the recording medium. This recording head is suspended above and biased toward a stretched flexible sheet of recording film by a support arm which maintains the head grooves in alignment with the direction of relative movement between the head and the film, but which allows the recording head limited movement to compensate for irregularities in the film surface, variable tension in the recording film, foreign particles between the head and the film and disturbances caused by bumping or vibration.

A head similar to that utilized in the present invention has been disclosed in IBM Technical Disclosure Bulletins volume 19, No. 11, April 1977 pages 4347-4348; volume 20, No. 1, June 1977 page 37; volume 20, No. 8, January 1978, pages 3185-3186 and volume 22, No. 4, September 1979, pages 1597-1599. These heads, however, are designed for use in a so-called "Bernoulli flight deck" wherein the head is rigidly mounted and a flexible film disk is rotated in proximity to the head. Thus the problems encountered in attempting to suspend such a head above a rotating film need not have been and were not considered.

Although a support arm similar to that used in the present invention has been employed for a number of years in conjunction with the flying of recording heads relative to rigid recording disks as described above in relation to EP-A-0007401, the problems of head design to allow flying relative to a flexible film need have not been and were not considered.

### Disclosure of Invention

The present invention discloses a recording head and support arm assembly which combines and utilizes the advantages of each to provide a structure which results in a recording head flying in a stable fashion in very close proximity to a thin, flexible stretched surface recording (SSR) film. Flying heights of between 0.10 and 0.15 micrometers have been achieved compared to the typical 0.25 to 0.50 micrometers of the rigid disks of the prior art.

In particular, the present invention comprises a head and support arm assembly for positioning a recording head in proximity to a rotating flexible stretched surface recording disk having at least one thin film tensioned on a supporting substrate, with the recording head and support arm assembly comprising a magnetic transducer head including a spherical surface adjacent the thin film, a series of parallel grooves opening at the spherical surface and aligned with the direction of relative movement between the head and the thin film and a recording core disposed substantially at the spherical surface and generally centered with respect to the grooves and the head transversely to the direction of relative movement between the head and the film, and a support arm mounting the head and resiliently biasing the head toward the thin film, the arm resisting movement of the head in the direction of relative movement between the head and the thin film and permitting limited rotational movement of the head relative to the plane of the thin film about an axis parallel to the radius of the disk and an axis parallel to the direction of relative movement between the head and the thin film, the support arm thereby maintaining the head grooves parallel to the direction of relative movement between the head and the thin film while permitting rotative movement of the spherical surface relative to the thin film.

Brief Description of the Drawings

The present invention will be more thoroughly described with reference to the accompanying drawings, wherein like numbers refer to like parts in the several views, and wherein:

FIGURE 1 is a top plan view of a data recording device including a recording head and support arm assembly of the present invention;

FIGURE 2 is a cross-sectional view of the data recording device of FIGURE 1, taken generally along the line 2-2 of FIGURE 1;

FIGURE 3 is a side elevational view of the recording head and support arm assembly;

FIGURE 4 is a top plan view of the recording head and support arm assembly;

FIGURE 5 is a bottom plan view of the recording head;

FIGURE 6 is a side elevational view of the recording head; and

FIGURE 7 is an end elevational view of the recording head.

Detailed Description

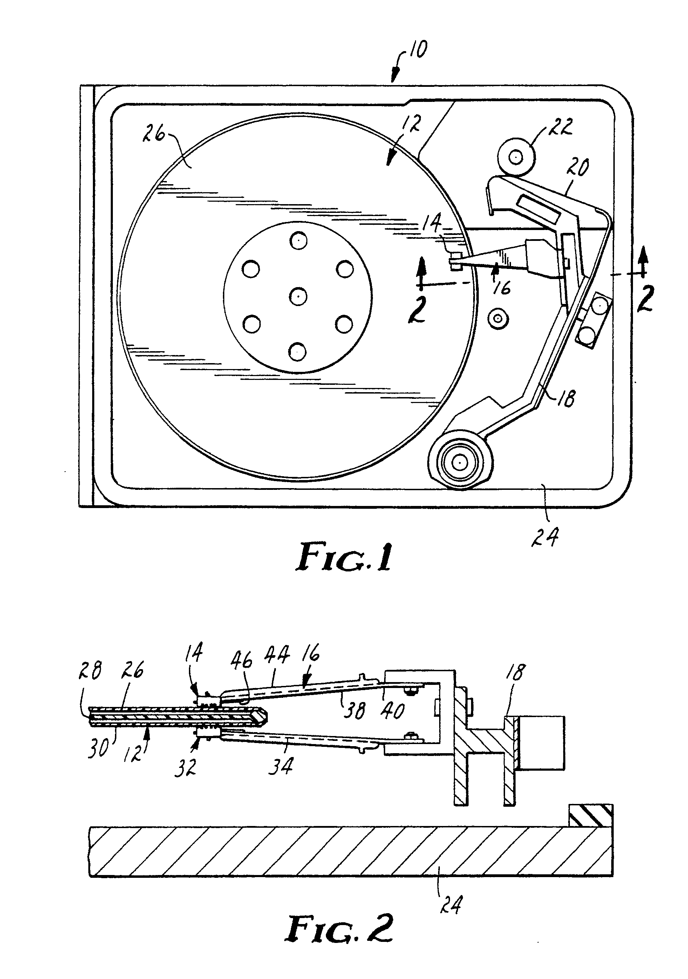

FIGURE 1 illustrates a stretched surface recording (SSR) device, generally indicated as 10, which includes an SSR disk 12 which is rapidly rotated relative to a recording and playback head 14 which is mounted on a support arm 16 and radially traversed across the surface of the SSR disk 12 by a pivoting cue arm 18. The cue arm 18 is driven by a wire or ribbon 20 wrapped around a capstan 22, which capstan 22 is in turn driven by a stepper motor (not shown). The entire mechanism is supported by an enclosure 24 which contains electronics (not shown) controlling the recording and playback head 14 and a motor (not shown) for driving the SSR disk 12. The means for transporting the head is not part of the present invention, and the cue arm 18 could be replaced by another transport, such as a carriage moving on a linear track.

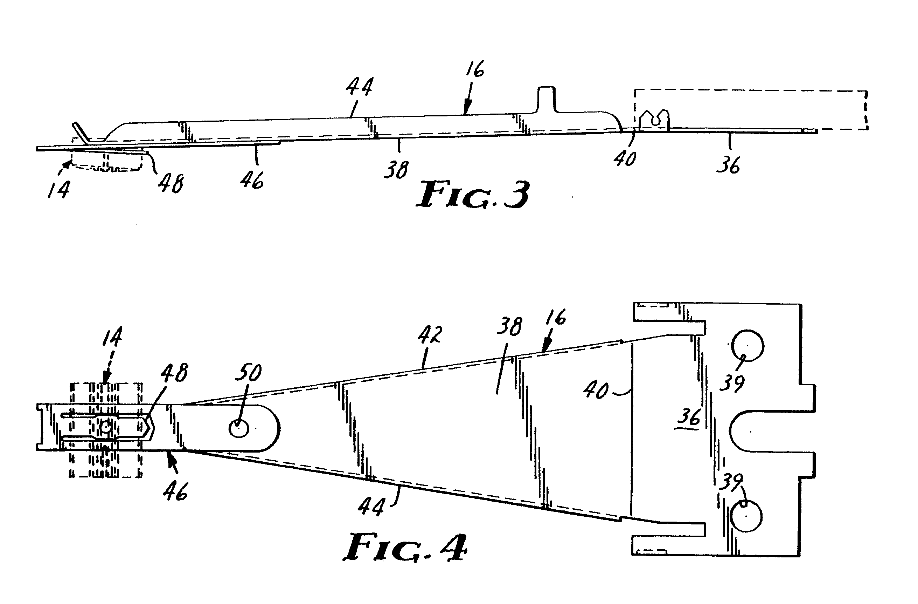

As best seen in FIGURE 2, the SSR disk 12 includes at least one thin polymeric film 26 which is suitably coated with a magnetic material (not shown) to enable the recording process. The thin film 26 is stretched across and bonded to a rigid polymeric substrate 28 which maintains the film 26 in tension and thus provides a flat, resilient recording surface. As further illustrated in FIGURE 2, the substrate 28 may support a second thin polymeric film 30 and the cue arm 18 may support a second recording and playback head 32 mounted on a second support arm 34. The head 32 and the support arm 34 are identical to the head 14 and the support arm 16, respectively.

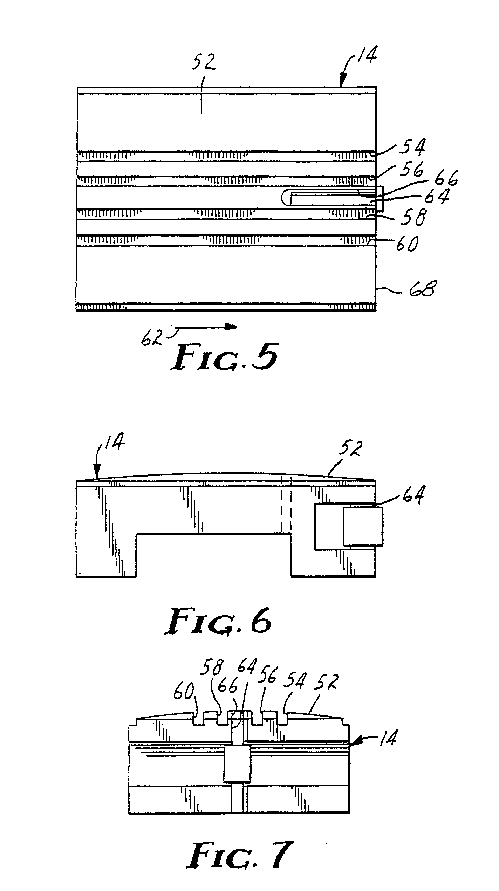

The support arm 16 is manufactured by Brum-Ko Magnetics Corporation, Elkhorn, Nebraska, is best seen in FIGURES 3 and 4, and includes a mounting portion 36 which is rigidly attached to the cue arm 18 by means of two holes 39 which accept screws or bolts. Extending from the mounting portion 36 is a biasing portion 38 which is angled with respect to the mounting portion 36 by bending the support arm 16 along a fold line 40. The support arm 16 is shown in FIGURE 3 in approximately the position the arm 16 will assume in operation. The angle of bend between the biasing portion 38 and the mounting portion 36 is approximately 15 degrees when the support arm 16 is unloaded. The material of the support arm 16 is resilient stainless steel and a bend of approximately 15 degrees produces a load force at the end of the biasing portion 38 opposite the mounting portion 36 of approximately 0.10 Newton when the biasing portion 38 is in the operating position shown in FIGURE 3. The biasing portion 38 includes folded or rolled edges 42 and 44 which increase its rigidity.

Attached to the end of the biasing portion 38 opposite the mounting portion 36 is a stainless steel strip 46 which supports in turn a head attachment tab 48 which is formed by separating three of the edges of the head attachment tab 48 from the strip 46. As may be seen in FIGURE 3, the head attachment tab 48 is bent relative to the stainless steel strip 46 so that the attachment tab 48 is substantially parallel to the mounting portion 36 when the support arm 16 is positioned for operation. The stainless steel strip 46 and the biasing portion 38 include a hole 50 which is provided to guide wires (not shown) from the recording head 14 along the support arm 16. For reference, the overall length of the support arm 16 is approximately 32 mm and the width of the mounting portion 36 is approximately 10 mm.

The recording and playback head 14 is attached to the head attachment tab 48 by means of an adhesive and is maintained free of contact between the recording head 14 and the stainless steel strip 46 and the biasing portion 38 of the support arm 16. As noted earlier, the attachment tab 48 maintains the recording head 14 substantially parallel to the mounting portion 36 when the support arm is in the operating position.

The recording and playback head 14 is best illustrated in FIGURES 5-7 and is manufactured of a ceramic in a generally rectangular shape of approximately 3.2 mm by 4.3 mm. The surface 52 in proximity to the thin film 26 is spherical with a radius of approximately 102 mm. Cut into this spherical surface 52 are four grooves 54-60 which are substantially square in cross-section and are aligned with the direction of film 26 movement relative to the recording head 14. The direction of film 26 movement is illustrated by the arrow 62 in FIGURE 5. The width and depth of each groove 54-60 are approximately 0.15 mm and the separation between the outer grooves 54 and 60 and the inner grooves 56 and 58 is approximately 0.20 mm. The separation between the two inner grooves 56 and 58 is approximately 0.30 mm.

The recording and playback head 14 is provided with a recording core 64 which is positioned within a slot 66 formed in the land between the inner grooves 56 and 58. The core 64 is maintained within the slot 66 by glass bonding and, as seen in FIGURE 5, is positioned approximately midway between the apex of the spherical surface 52 and the trailing edge 68 of the head 14 with respect to tape movement 62, with the gap of the core preferably located at least 0.50 mm from the trailing edge 68. The core 64 is positioned within the slot 66 so that its upper surface is even with the spherical surface 52.

The grooves 54-60 in combination with the spherical surface 52 are provided to maintain a stable relationship between the recording head 14 and the stretched thin film 26 of the SSR disk 12. Although the thin film 26 is in tension, the film 26 remains flexible and is deformed into a depression or "dimple" in response to an applied load. This dimpling is advantageous, however, because it allows the thin film 26 to conform to the shape of the recording head 14 and thus reduces the gap distance between the thin film 26 and the recording core 64. Except when the SSR disk 12 is stationary, however, the recording head 14 is never actually in contact with the film 26. As the SSR disk 12 rotates, an air cushion is built up between the recording head 14 and the film 26 which simultaneously lifts the recording head 14 from the film 26 surface and forms a slight depression in the film 26 which conforms to the spherical shape of the head surface 52. It will be recognized that a delicate balance of forces exists to maintain the recording head 14 at a proper flying height with respect to the film 26 surface.

This delicate balance is maintained by the support arm 16 in conjunction with the shape of the head surface 52 in proximity to the thin film 26.

The spherical shape of the head surface 52 is chosen to provide a stable air bearing between the head 14 and the film 26. It has been found that a large spherical radius of the head surface 52 produces a wide and very stable air bearing between the head 14 and the film 26. Unfortunately, however, a large radius not only increases stability but also increases the flying height or separation between the head 14 and the film 26. A large separation is detrimental because the core 64 cannot adequately interact with the magnetic recording material found on the surface of the film 26. To reduce the separation between the head 14 and the film 26, the grooves 54-60 are provided which bleed air past the head 14 and decrease the height of the head 14 above the film 26 without disrupting the stability achieved by the large radius of the spherical surface 52. Thus the recording head 14 is provided with a large spherical surface 52 to provide a stable air bearing cushion between the recording head 14 and the film 26 and the grooves 54-60 are provided to decrease the separation between the head 14 and the film 26 to a height which allows proper data transfer between the ferrite core 64 and the magnetic particles of the film 26.

The relationship between the head 14 and the film 26 is also intimately affected by the characteristics of the support arm 16. The support arm 16 must provide a sufficient resilient biasing force between the head 14 and the film 26 to maintain the two in proximity, and must maintain the grooves 54-60 of the head 14 rigidly aligned with the direction of relative movement between the head 14 and the film 26. In addition to these functions, the support arm 16 must allow the recording head 14 to roll about an axis parallel to the direction of relative movement between the head 14 and the film 26 and pitch about an axis parallel to a radius of the SSR disk 12. These movements of the head 14 are necessary to allow the head 14 to compensate for transient conditions such as bumping of the recording device 10, dust and debris on the film 26 and increased or asymmetrical rigidity of the film as the rim of the SSR disk 12 is approached.

The rigidity necessary to maintain the grooves 54-60 of the recording head 14 in alignment with the direction of travel relative to the film 26 is provided by the rolled or folded edges 42 and 44 of the biasing portion 38 of the support arm 16. The necessary limited freedom of the recording head 14 to roll and pitch is provided by attaching the recording head 14 to the attachment tab 48 of the support arm 16, which attachment tab 48 remains relatively flexible with respect to the support arm 16 by virtue of the fact that the head attachment tab 48 is connected to the remainder of the support arm 16 along only one edge. Bending of the head attachment tab 48 relative to the support arm 16 so that the head 14 is maintained substantially parallel to the mounting portion 36 of the support arm 16 also contributes to stability at the air bearing between the recording head spherical surface 52 and the film 26.

The head 14 and support arm 16 configuration described has been found to operate suitably with an SSR disk 12 which has a film 26 tension of between about 500 and 900 Newtons per meter and which rotates to produce a velocity in excess of about 9.0 meters per second at the periphery of the disk 12. To maintain a desired flying height of about 0.10 to 0.15 micrometers, the spherical radius of the head surface 52 will have to be increased and the spaces between the slots 54-60 will have to be decreased as tension of the film 26 increases. The converse is also true.

As the velocity of the disk 12 decreases to approach the limiting value of about 9.0 meters per second, the slots 54-60 will have to be narrowed or the spaces between the slots 54-60 will have to be increased to maintain the proper flying height. Increased velocities will only slightly increase the flying height.

Stiffness of the polymeric film 26 material has little effect on performance, so long as the effect of film 26 tension dominates the effect of film 26 stiffness. If an inherently stiffer film 26 is utilized, the effect of this stiffness may be compensated for by decreasing the thickness of the film 26. For example, satisfactory performance has been achieved using a film 26 which has a modulus of elasticity of $4.8 \times 10^9$ Newtons per square meter and a thickness of 0.038 mm and a film which has a modulus of elasticity of $2.8 \times 10^{10}$ Newtons per square meter and a thickness of 0.025 mm.

Thus, although a head similar to that described has been employed in so-called "Bernoulli flight decks", wherein the head is held stationary, it has not heretofore been attempted to utilize such a head at the end of a free support arm and in proximity to an SSR disk and, while support arms similar to those described herein have been employed in conjunction with rigid disks, it has not previously been attempted to use such a support arm in conjunction with the type of head described. Nor has it been attempted to use the head described in an application employing an SSR disk 12.

There has thus been described a recording head 14 and support arm 16 assembly which maintains a recording core in proper proximity to a thin film 26 and maintains a delicate balance of forces at the air bearing between the recording head 14 and the thin film 26.

Although the present invention has been described with respect to only a single embodiment, it is recognized that many modifications will be apparent to those skilled in the art. For example, the edges between the slots 54-60 and the spherical surface 52 may be rounded rather than sharp as shown in FIGURE 7. The effect of such rounding has been found equivalent to increasing the width of the slots 54-60.

## Claims

1. A recording head and support arm assembly (14, 16) for positioning a recording head (14) in proximity to a rotating flexible stretched surface recording disk (12) having at least one thin film (26) tensioned on a supporting substrate (28), said head and support arm assembly (14, 16) comprising:

   a magnetic transducer head (14) including a spherical surface (52) adjacent said thin film (26), a series of parallel grooves (54-60) opening at said spherical surface (52) and aligned with the direction of relative movement between said head (14) and said thin film (26) and a recording core (64) disposed substantially at said spherical surface (52) and generally centered with respect to said grooves (54-60) and said head (14) transversely to said direction of relative movement between said head (14) and said thin film (26); and

   a support arm (16) mounting said head (14), characterised by said support arm resiliently biasing said head (14) toward said thin film (26), said arm resisting movement of said head (14) in the direction of relative movement between said head (14) and said thin film (26) and permitting limited rotational movement of said head (14) relative to the plane of said thin film (26) about an axis parallel to a radius of said disk and an axis parallel to said direction of relative movement between said head (14) and said thin film (26), said support arm (16) thereby maintaining said head grooves (54-60) parallel to said direction of relative movement between said head (14) and said thin film (26) while permitting rotative movement of said spherical surface (52) relative to said thin film (26).

2. A recording head and support arm assembly (14, 16) according to claim 1 wherein said support arm (16) includes a mounting portion (36), a biasing portion (38) at an angle with respect to said mounting portion (36) when said biasing portion (38) is in an unloaded state and a head attachment tab (48) supporting said head (14) and disposed opposite said mounting portion (36) and substantially parallel to said mounting portion (36) when said biasing portion (38) and said head attachment tab (48) are unloaded.

3. A recording head and support arm assembly (14, 16) according to claim 2 wherein said head attachment tab (48) is generally rectangular and connected at only one edge to said biasing portion (38) to allow relative movement between said head (14) and said biasing portion (38).

4. A recording head and support arm assembly (14, 16) according to claim 3 wherein said biasing portion (38) includes rolled edges (42, 44) to increase its rigidity.

5. A recording head and support arm assembly (14, 16) according to claim 1 wherein said head (14) includes four grooves (54-60) symmetrically disposed with respect to the transverse center line of said head (14).

6. A recording head and support arm assembly (14, 16) according to claim 5 wherein said grooves (54-60) each have dimensions which are substantially equal in depth from said spherical surface (52) and width transverse to said direction of relative movement between said head (14) and said thin film (26).

7. A recording head and support arm assembly (14, 16) according to claim 1 wherein said recording core (64) is disposed between the apex of said spherical surface (52) and the edge of said head (14) in last proximity to said rotating thin film (26).

8. A recording head and support arm assembly (14, 16) according to claim 1 wherein said spherical surface (52) has a substantially rectangular border.

**Revendications**

1. Assemblage de tête d'enregistrement et de bras support (14,16) pour positionner une tête d'enregistrement (14) à proximité d'un disque d'enregistrement rotatif à surface tendue flexible (12) comportant au moins un film mince (26) mis en tension sur un substrat support (28), ledit assemblage de tête et de bras support (14,16) comprenant :

une tête de transduction magnétique (14) incluant une surface sphérique (52) adjacente audit film mince (26), une série de rainures parallèles (54-60) s'ouvrant dans ladite surface sphérique (52) et alignées avec la direction du mouvement relatif entre ladite tête (14) et ledit film mince (26) et un noyau d'enregistrement (64) disposé sensiblement dans ladite surface sphérique (52) et sensiblement centré par rapport auxdites rainures (54-60) et à ladite tête (14) transversalement à ladite direction du mouvement relatif entre ladite tête (14) et ledit film mince (26) ; et

un bras support (16) portant ladite tête (14), carctérisé en ce que ledit bras support pousse élastiquement ladite tête (14) vers ledit film mince (26), ledit bras résistant au mouvement de ladite tête (14) dans la direction du mouvement relatif entre ladite tête (14) et ledit film mince (26) et permettant un mouvement limité de rotation de ladite tête (14) par rapport au plan du dit film mince (26) autour d'un axe parallèle à un rayon dudit disque et d'un axe parallèle à ladite direction du mouvement relatif entre ladite tête (14) et ledit film mince (26), ledit bras support (16) maintenant ainsi les dites rainures (54-60) de la tête parallèles à ladite direction du mouvement relatif entre ladite tête (14) et ledit film mince (26) tout en permettant un mouvement de rotation de ladite surface sphérique (52) par rapport audit film mince (26).

2. Assemblage de tête d'enregistrement et de bras support(14,l6) suivant la revendication 1, dans lequel ledit bras support (16) comprend une partie de montage (36), une partie de poussée (38) inclinée par rapport à ladite partie de montage (36) lorsque ladite partie de poussée (38) est dans un état non chargé, et une languette de fixation de tête (48) supportant ladite tête (14) et disposée à l'opposé de ladite partie de montage (36) et sensiblement parallèle à ladite partie de montage (36) lorsque ladite partie de poussée (38) et la dite languette de fixation de tête (48) ne sont pas en charge.

3. Assemblage de tête d'enregistrement et de bras support (14,16) suivant la revendication 2, dans lequel ladite languette de fixation de tête (48) est sensiblement rectangulaire et connectée seulement par un bord à ladite partie de poussée (38), pour permettre un mouvement relatif entre ladite tête (14) et ladite partie de poussée (38).

4. Assemblage de tête d'enregistrement et de bras support (14,16) suivant la revendication 3, dans lequel ladite partie de poussée (38) comporte des bords roulés (42,44) afin d'augmenter sa rigidité.

5. Assemblage de tête d'enregistrement et de bras support (14,16) suivant la revendication 1, dans lequel ladite tête (14) comporte quatre rainures (54-60) symétriquement disposées par rapport à l'axe transversal de ladite tête (14).

6. Assemblage de tête d'enregistrement et de bras support (14,16) suivant la revendication 5, dans lequel lesdites rainures (54-60) ont chacune des dimensions qui sont sensiblement égales, en profondeur par rapport à ladite surface sphérique (52) et en largeur transversalement à ladite direction du mouvement relatif entre ladite tête (14) et ledit film mince (26).

7. Assemblage de tête d'enregistrement et de bras support (14,16) suivant la revendication 1, dans lequel ledit noyau d'enregistrement (64) est disposé entre le point haut de ladite surface sphérique (52) et le bord de ladite tête (14) en arrière par rapport audit film mince rotatif (26).

8. Assemblage de tête d'enregistrement et de bras support (14,16) suivant la revendication 1, dans lequel ladite surface sphérique (52) présente un contour sensiblement rectangulaire.

**Ansprüche**

1. Aus einem Aufnahmekopf und einem Tragarm bestehende Anordnung (14, 16) zum Positionieren eines Aufnahmekopfes (14) zunächst einer rotierenden Speicherplatte (12) mit einer gespannten flexiblen Oberfläche, wobei diese Platte mindestens eine über einem Tragsubstrat (28) gespannte Feinfolie (26) besitzt und die aus dem Kopf und dem Tragarm bestehende Anordnung (14,16) umfaßt:
einen Magnetkopf (14) mit einer im Bereich der Folie angeordneten Kugelfläche (52), in der in einer Reihe angeordnete, parallele Rillen (54 bis 60) münden, die sich in der Richtung der Relativbewegung zwischen dem Kopf (14) und der Feinfolie (26) erstrecken, der Kopf ferner einen Aufzeichnungskern (64) besitzt, der im wesentlichen an der Kugelfläche (52) angeordnet und quer zu der Richtung der Relativbewegung zwischen dem Kopf (14) und der Feinfolie (26) in Bezug auf die Rillen (54 bis 60) und den Kopf (14) allgemein zentriert ist; und
einen den Kopf (14) tragenden Tragarm (16), dadurch gekennzeichnet, daß der Tragarm den Kopf (14) zu der Feinfolie (26) hin elastisch vorbelastet und einer Bewegung des Kopfes (14) in der Richtung der Relativbewegung zwischen dem Kopf (14) und der Feinfolie (26) einen Widerstand entgegensetzt, aber eine begrenzte Drehbewegung des Kopfes (14) relativ zur Ebene der Feinfolie (26) um eine zum Radius der Platte parallele Achse und um eine zur Richtung der Relativbewegung zwischen dem Kopf (14) und der Feinfolie (26) parallele Achse gestattet und der Tragarm daher die Rillen (54 bis 60) des Kopfes in einer zu der Richtung der Relativbewegung zwischen dem Kopf (14) und der Feinfolie (26) parallelen Lage hält, aber eine Drehung der Kugelfläche (52) relativ zu der Feinfolie (26) gestattet.

2. Aus einem Aufnahmekopf und einem Tragarm bestehende Anordnung (14, 16) nach Anspruch 1, dadurch gekennzeichnet, daß der Tragarm (16) einen Befestigungsteil (36) besitzt, ferner einen Vorbelastungsteil (38) , der sich im unbelasteten Zustand unter einem Winkel zu dem Befestigungsteil (36) erstreckt, und einen den Kopf (14) tragenden Kopfbefestigungslappen (48), der dem Befestigungsteil (36) entgegengesetzt angeordnet und im unbelasteten Zustand des Vorbelastungsteils (38) und des Kopfbefestigungslappens (48) zu dem Befestigungsteil (36) im wesentlichen parallel ist.

3. Aus einem Aufnahmekopf und einem Tragarm bestehende Anordnung (14, 16) nach Anspruch 2, dadurch gekennzeichnet, daß der Kopfbefestigungslappen (48) allgemein rechteckig und nur an einem Rand mit dem Vorbelastungsteil (38) verbunden ist, um eine Relativbewegung zwischen dem Kopf (14) und dem Vorbelastungsteil (38) zu gestatten.

4. Aus einem Aufnahmekopf und einem Tragarm bestehende Anordnung (14, 16) nach Anspruch 1, dadurch gekennzeichnet, daß der Vorbelastungsteil (38) zum Erhöhen seiner Starrheit eingerollte Ränder (42, 44) besitzt.

5. Aus einem Aufnahmekopf und einem Tragarm bestehende Anordnung (14, 16) nach Anspruch 1, dadurch gekennzeichnet, daß der Kopf (14) vier Rillen (54 bis 60) besitzt, die in Bezug auf die Quermittellinie des Kopfes (14) symmetrisch angeordnet sind.

6. Aus einem Aufnahmekopf und einem Tragarm bestehende Anordnung (14, 16) nach Anspruch 5, dadurch gekennzeichnet, daß bei jeder der Rillen (54 bis 60) die von der Kugelfläche (52) aus gemessene Tiefe und die quer zu der Richtung der Relativbewegung zwischen dem Kopf (14) und der Feinfolie (26) gemessene Breite im wesentlichen gleich sind.

7. Aus einem Aufnahmekopf und einem Tragarm bestehende Anordnung (14, 16) nach Anspruch 1, dadurch gekennzeichnet, daß der Aufnahmekern (64) zwischen dem Scheitel der Kugelfläche und dem in Bezug auf die Drehbewegung der Feinfolie (26) nachlaufenden Rand des Kopfes (14) angeordnet ist.

8. Aus einem Aufnahmekopf und einem Tragarm bestehende Anordnung (14, 16) nach Anspruch 1, dadurch gekennzeichnet, daß die Kugelfläche (52) im wesentlichen rechteckig begrenzt ist.

FIG.1

FIG.2

FIG. 3

FIG. 4

EP 0 213 875 B1

FIG.5

FIG.6

FIG.7